# FASCICULE DE BREVET EUROPEEN

(11) **EP 3 271 206 B1**
(45) Date de publication et mention de la délivrance du brevet: **22.04.2020**
(21) Numéro de dépôt: 15820462.8
(22) Date de dépôt: 16.12.2015
(51) Int. Cl.: B60K 35/00, B60K 37/06, B60K 28/06, B60R 11/04

(54) **MODULE D'ASISTANCE DE VOLANT DE VEHICULE**
ASSISTENZMODUL FÜR DAS LENKRAD EINES FAHRZEUGS
ASSISTANCE MODULE FOR THE STEERING WHEEL OF A VEHICLE

(30) Priorité: 22.12.2014 FR 1463130
(43) Date de publication de la demande: 24.01.2018
(73) Titulaire: Autoliv Development AB, 447 83 Vårgårda (SE)
(72) Inventeur: GROLEAU, Laurent, 86190 Quincay (FR)
(74) Mandataire: Poindron, Cyrille
(86) Numéro de dépôt international: PCT/EP2015/080069
(87) Numéro de publication internationale: WO 2016/102280

(56) Documents cités:
- EP-A2- 2 695 792
- WO-A1-2005/021314
- WO-A1-2014/077190
- DE-B3-102004 007 253

## Description

La présente invention concerne de manière générale un volant de véhicule, et en particulier un volant pour un véhicule équipé d'une caméra de surveillance du conducteur, pour détecter par exemple un éventuel assoupissement de ce dernier. Avec un tel système il peut être avantageux de prévoir dans le véhicule une source de rayonnement infra rouge, agencée pour éclairer le conducteur, afin de garantir un éclairage convenable du conducteur indépendamment de la luminosité dans l'habitacle du véhicule.

Il est connu dans l'art antérieur d'intégrer une telle source de rayonnement infra rouge (une diode électroluminescente infra rouge par exemple) dans un volant, tel que celui divulgué dans le document WO2014077190. En contrepartie, ce système présente notamment l'inconvénient de complexifier la structure du volant, d'imposer des contraintes de design importantes, et de le dé-standardiser.

Le document DE102004007253 décrit un volant de véhicule équipé de dispositifs optiques infrarouges, le document WO2005021314 décrit une méthode de contrôle d'un écran d'affichage pour automobile, le document EP2695792 décrit un volant de véhicule équipé de dispositifs optiques infrarouges, et le document WO2014077190 décrit un volant de véhicule et un dispositif d'alerte.

Un but de la présente invention est de répondre aux inconvénients de l'art antérieur mentionnés ci-dessus et en particulier, tout d'abord, de proposer un volant de véhicule dont l'implantation d'une source de rayonnement infra rouge ne provoque pas de complexité sur sa structure.

Pour cela un premier aspect de l'invention concerne un module d'assistance d'un conducteur agencé pour être fixé sur un volant de direction de véhicule automobile comprenant un premier dispositif d'information du conducteur caractérisé en ce que le module d'assistance comprend en outre une source de rayonnement infrarouge agencée pour éclairer le conducteur et faisant partie d'un deuxième dispositif d'information.

Le volant équipé d'un module selon la mise en œuvre ci-dessus reste standard dans sa structure, car la source de rayonnement infra rouge est supportée par le module d'assistance qui est principalement dédié à une première fonction d'information, et rapporté sur le volant. En d'autres termes, l'invention limite la complexité, car le premier dispositif est différent et distinct du deuxième dispositif, mais en supporte la source de rayonnement infra rouge, qui doit être sur le volant.. Le premier dispositif n'utilise pas de composants du deuxième dispositif, et le deuxième dispositif n'utilise le module d'assistance qu'en tant que support de sa source de rayonnement infra rouge car les deux dispositifs sont distincts et n'offrent pas la même fonction. A part la source de rayonnement infra rouge, le premier dispositif peut n'avoir aucun composant commun avec le deuxième dispositif.

De ce fait, seul le module d'assistance est spécifique lorsque la fonction d'éclairage infrarouge du conducteur doit être implantée dans le véhicule. La source de rayonnement infrarouge peut être une diode électroluminescente infrarouge, et agencée pour émettre un rayonnement infrarouge dont la longueur d'onde peut être comprise entre 0.78µm et 5mm.

Enfin, il est à noter que le module d'assistance initialement conçu pour faire partie d'un premier dispositif d'information (relatif par exemple à la commande de l'autoradio du véhicule), devient multi fonction et fait partie d'une deuxième dispositif d'information du conducteur sur sa vigilance (dont fait partie la source de rayonnement infrarouge et la caméra infrarouge). Ces dispositifs d'information ne sont pas forcément complètement intégrés uniquement sur le volant, ils peuvent également être agencés sur d'autres organes du véhicule.

Avantageusement, le premier dispositif d'information contient les caractéristiques de la revendication 1, qui comprennent:
- une source de rayonnement visible,
- au moins une première paroi formée d'au moins un matériau pouvant au moins partiellement être traversé par un rayonnement visible émis par la source de rayonnement visible et
- au moins une deuxième paroi formée d'au moins un matériau pouvant au moins partiellement être traversé par un rayonnement infrarouge émis par la source de rayonnement infrarouge. Cette mise en œuvre permet de simplifier l'intégration de la source de lumière infrarouge et de rendre cette intégration plus discrète.

Avantageusement, le premier dispositif d'information comprend :
- une source de rayonnement visible,
- une troisième paroi formée d'au moins un matériau pouvant au moins partiellement être traversé par un rayonnement visible émis par la source de rayonnement visible et par un rayonnement infrarouge émis par la source de rayonnement infrarouge. Dans cette mise en œuvre, la portion de la paroi qui peut transmettre la lumière visible est également agencée en regard de la source de rayonnement infrarouge, c'est-à-dire entre cette dernière et le conducteur à éclairer. On comprend alors que l'aspect extérieur du module d'assistance est identique, avec ou sans la source de rayonnement infrarouge. On peut par exemple agencer la source de rayonnement infra rouge sous une surface qui laisse passer un rétro éclairage de nuit, comme un signe sur une touche de bouton embarqué sur le volant, de commande d'autoradio ou de régulateur de vitesse.

Avantageusement, le premier dispositif d'information comprend une source de rayonnement visible.

Avantageusement, le module d'assistance comprend au moins une carte électronique supportant la source de rayonnement infrarouge et la source de rayonnement visible. La structure du module d'assistance est prévue pour supporter la source de rayonnement infrarouge, ce qui simplifie la conception : il suffit de connecter une source infrarouge sur la carte électronique lorsque l'option infrarouge est à prévoir.

Avantageusement, la source de rayonnement infrarouge et la source de rayonnement visible font partie du même circuit électrique. En effet, la source de rayonnement infrarouge et la source de rayonnement visible sont toutes les deux utiles lorsque la luminosité est faible. Une alimentation simultanée des deux sources permet de simplifier le câblage dans le véhicule puisqu'un câble spécifique pour alimenter la source infrarouge n'est plus nécessaire.

Avantageusement, le module d'assistance comprend une paroi couvrant la source de rayonnement infrarouge et étant formée d'au moins un matériau pouvant au moins partiellement être traversé par un rayonnement infrarouge émis par la source de rayonnement infrarouge.

Avantageusement, la paroi est mobile par rapport au volant de direction de sorte à pouvoir actionner au moins un moyen de commande du véhicule. Selon cette mise en œuvre, la paroi est typiquement la paroi externe d'un bouton de commande (lié ou faisant partie du premier dispositif d'information) embarqué sur le véhicule, par exemple d'autoradio, de régulateur de vitesse, de téléphone, ou d'avertisseur sonore.

Un deuxième aspect de l'invention concerne un volant de direction de véhicule automobile comprenant au moins un module d'assistance selon le premier aspect de l'invention.

Un troisième aspect de l'invention concerne un véhicule automobile comprenant au moins un volant de direction selon le deuxième aspect de l'invention, et/ou au moins un module d'assistance selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue générale d'un volant de véhicule équipé de modules d'assistance selon la présente invention ;
- la figure 2 représente une vue en coupe d'un des modules d'assistance du volant de la figure 1.

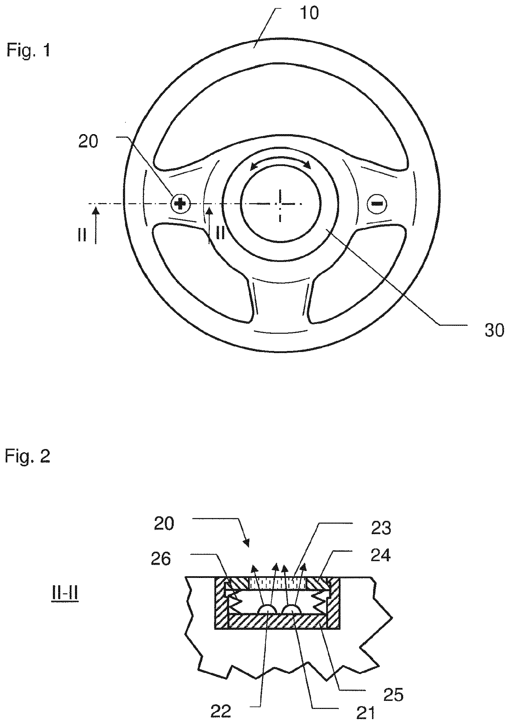

La figure 1 représente un volant de direction de véhicule comprenant une jante 10 reliée à un moyeu 30 par trois branches. Sur deux des branches du volant sont agencés des modules d'assistance 20 du conducteur, c'est-à-dire des boutons de réglage du volume sonore de l'autoradio du véhicule. Ces modules d'assistance envoient des informations visuelles au conducteur, soit sous formes de signes, soit sous forme de signaux lumineux.

Le module d'assistance 20 de gauche est le bouton à actionner pour augmenter le volume sonore, et le module d'assistance 20 de droite est le bouton à actionner pour réduire le volume sonore. A cet effet, chaque bouton porte un signe informatif pour le conducteur, respectivement "+" et "-" pour chaque module d'assistance.

Afin d'indiquer la fonction et le positionnement de chaque module d'assistance 20 au conducteur, et même de nuit, il est prévu de rétro éclairer les boutons, et en particulier au travers de la surface de signes "+" et "-" qui est rendue translucide ou transparente, et une source de lumière visible est agencée sous la portion translucide ou transparente de la paroi externe des boutons.

La figure 2 représente une coupe du module d'assistance de gauche du volant représenté figure 1, selon l'axe II-II de cette figure.

La paroi externe du module d'assistance 20 comprend une portion translucide 23 (qui permet de laisser passer la lumière visible), et une portion opaque 24, afin de délimiter le signe "+". Cette paroi externe est mobile pour permettre de commander le réglage du volume sonore, et des moyens élastiques 26 sont prévus pour exercer une force de rappel sur la paroi externe.

Cette dernière est enchâssée dans une boite soutenue par une carte électronique 25 qui supporte une source de rayonnement visible 22, une diode électroluminescente par exemple. On entend par rayonnement visible un rayonnement dont la longueur d'onde est comprise entre 0.39µm et 0.78µm, bornes comprises.

Lorsque le véhicule est équipé d'une caméra infrarouge pour détecter un éventuel endormissement du conducteur, il est avantageux de prévoir une source de rayonnement infrarouge 21 pour garantir l'acquisition, par la camera, d'images pouvant être traitées ultérieurement de manière satisfaisante.

La présente invention propose d'ajouter au module d'assistance 20 cette source de rayonnement infrarouge 21 (de longueur d'onde comprise entre 0.78µm et 5mm, bornes comprises). On peut envisager d'utiliser une diode électroluminescente infrarouge.

La source de rayonnement infrarouge 21 est montée sur la même carte électronique 25 que la source de rayonnement visible 22, et elle est également en regard de la portion translucide 23, ce qui permet d'éclairer le conducteur, car cette portion translucide 23 est perméable aux rayonnements infrarouges.

Bien entendu, on peut d'une manière générale envisager de déporter les sources de rayonnement visible 22 et de rayonnement infrarouge 21 de la paroi translucide, en employant un ou plusieurs guide lumière (ou guides de rayonnement infrarouge). Cela permet de donner des degrés de liberté au concepteur pour agencer d'autres organes dans le volant.

En conséquence, le module d'assistance 20 présente le même aspect extérieur, qu'il soit équipé ou non de la source de rayonnement infrarouge 21, et la structure générale du volant n'est pas impactée par cette option.

## Revendications

1. Module d'assistance (20) d'un conducteur agencé pour être fixé sur un volant de direction de véhicule automobile comprenant un premier dispositif d'information du conducteur, tel que la commande d'un autoradio, le module d'assistance (20) comprenant en outre une source de rayonnement infrarouge (21) supportée par le module d'assistance et agencée pour éclairer le conducteur,
**caractérisé en ce que** la source de rayonnement infrarouge (21) fait partie d'un deuxième dispositif d'information, tel qu'un dispositif d'information du conducteur sur sa vigilance, distinct et différent du premier dispositif d'information.

2. Module d'assistance (20) selon la revendication 1, avec le premier dispositif d'information comprenant :
- une source de rayonnement visible (22),
- au moins une première paroi formée d'au moins un matériau pouvant au moins partiellement être traversé par un rayonnement visible émis par la source de rayonnement visible (22) et
- au moins une deuxième paroi formée d'au moins un matériau pouvant au moins partiellement être traversé par un rayonnement infrarouge émis par la source de rayonnement infrarouge (21).

3. Module d'assistance (20) selon la revendication 1 avec le premier dispositif d'information comprenant :
- une source de rayonnement visible (22),
- une troisième paroi formée d'au moins un matériau pouvant au moins partiellement être traversé par un rayonnement visible émis par la source de rayonnement visible (22) et par un rayonnement infrarouge émis par la source de rayonnement infrarouge (21).

4. Module d'assistance (20) selon la revendication précédente, comprenant au moins une carte électronique (25) supportant la source de rayonnement infrarouge (21) et la source de rayonnement visible (22).

5. Module d'assistance (20) selon l'une des revendications 2 à 4, dans lequel la source de rayonnement infrarouge et la source de rayonnement visible font partie du même circuit électrique.

6. Module d'assistance (20) selon la revendication 1, comprenant une paroi couvrant la source de rayonnement infrarouge (21) et étant formée d'au moins un matériau pouvant au moins partiellement être traversé par un rayonnement infrarouge émis par la source de rayonnement infrarouge (21).

7. Module d'assistance (20) selon l'une des revendications 2 à 4 dont la paroi est mobile par rapport au volant de direction de sorte à pouvoir actionner au moins un moyen de commande du véhicule.

8. Volant de direction de véhicule automobile comprenant au moins un module d'assistance selon l'une des revendications précédentes.

9. Véhicule automobile comprenant au moins un volant de direction selon la revendication précédente, et/ou au moins un module d'assistance selon l'une des revendications 1 à 7.

## Patentansprüche

1. Assistenzmodul (20) für Kraftfahrer, das so angeordnet ist, dass es an einem Lenkrad eines Kraftfahrzeugs befestigt werden kann und eine erste Fahrer-Informationsvorrichtung umfasst, wie etwa die Steuerung eines Autoradios, wobei das Assistenzmodul (20) außerdem eine Infrarot-Strahlungsquelle (21) umfasst, die von dem Assistenzmodul getragen wird und so angeordnet ist, dass sie den Fahrer beleuchtet, **dadurch gekennzeichnet, dass** die Infrarot-Strahlungsquelle (21) Teil einer zweiten Informationsvorrichtung ist, wie etwa einer Vorrichtung zur Information des Fahrers über seine Wachsamkeit, die von der ersten Informationsvorrichtung verschieden ist und sich von ihr unterscheidet.

2. Assistenzmodul (20) nach Anspruch 1, wobei die erste Informationsvorrichtung Folgendes umfasst:
- eine sichtbare Strahlungsquelle (22),
- mindestens eine erste Wand, die aus mindestens einem Material gebildet ist, durch das die von der sichtbaren Strahlungsquelle (22) ausgesendete sichtbare Strahlung zumindest teilweise hindurchtreten kann, und
- mindestens eine zweite Wand, die aus mindestens einem Material gebildet ist, durch das die von der Infrarot-Strahlungsquelle (21) ausgesendete Infrarot-Strahlung zumindest teilweise hindurchtreten kann.

3. Assistenzmodul (20) nach Anspruch 1 mit der ersten Informationsvorrichtung, Folgendes umfassend:
- eine sichtbare Strahlungsquelle (22),
- eine dritte Wand, die aus mindestens einem Material gebildet ist, durch das die von der sichtbaren Strahlungsquelle (22) ausgesendete sichtbare Strahlung sowie die von der Infrarot-Strahlungsquelle (21) ausgesendete Infrarot-Strahlung zumindest teilweise hindurchtreten kann.

4. Assistenzmodul (20) nach dem vorhergehenden Anspruch, mit mindestens einer Leiterplatte (25), die die Quelle der Infrarot-Strahlung (21) und die Quelle der sichtbaren Strahlung (22) hält.

5. Assistenzmodul (20) nach einem der Ansprüche 2 bis 4, wobei die Infrarot-Strahlungsquelle und die sichtbare Strahlungsquelle zu demselben elektrischen Schaltkreis gehören.

6. Assistenzmodul (20) nach Anspruch 1, mit einer die Infrarot-Strahlungsquelle (21) abdeckenden Wand, die aus mindestens einem Material gebildet ist, durch das die von der Infrarot-Strahlungsquelle (21) ausgesendete Infrarot-Strahlung zumindest teilweise hindurchtreten kann.

7. Assistenzmodul (20) nach einem der Ansprüche 2 bis 4, dessen Wand relativ zum Lenkrad beweglich ist, um mindestens ein Bedienelement des Fahrzeugs betätigen zu können.

8. Kraftfahrzeug-Lenkrad, das mindestens ein Assistenzmodul nach einem der vorhergehenden Ansprüche umfasst.

9. Kraftfahrzeug mit mindestens einem Lenkrad nach dem vorhergehenden Anspruch und/oder mit mindestens einem Assistenzmodul nach einem der Ansprüche 1 bis 7.

## Claims

1. Driver assistance module (20) arranged to be secured to a motor vehicle steering wheel, the assistance module comprising a first driver information device, such as the control of a car radio, the assistance module (20) further comprising an infrared radiation source (21) supported by the assistance module and arranged to illuminate the driver, **characterized in that** the infrared radiation source (21) forms part of a second information device, such as a device for informing the driver about their vigilance, which is separate and different from the first information device.

2. Assistance module (20) according to claim 1, the first information device comprising:
- a visible radiation source (22),
- at least one first wall formed of at least one material which can be traversed at least partially by visible radiation emitted by the visible radiation source (22) and
- at least one second wall formed of at least one material which can be traversed at least partially by infrared radiation emitted by the infrared radiation source (21).

3. Assistance module (20) according to claim 1, the first information device comprising:
- a visible radiation source (22),
- a third wall formed of at least one material which can be traversed at least partially by visible radiation emitted by the visible radiation source (22) and by infrared radiation emitted by the infrared radiation source (21).

4. Assistance module (20) according to the preceding claim, comprising at least one electronic board (25) supporting the infrared radiation source (21) and the visible radiation source (22).

5. Assistance module (20) according to one of claims 2 to 4, the infrared radiation source and the visible radiation source forming part of the same electrical circuit.

6. Assistance module (20) according to claim 1, comprising a wall which covers the infrared radiation source (21) and is formed of at least one material which can be traversed at least partially by infrared radiation emitted by the infrared radiation source (21).

7. Assistance module (20) according to one of claims 2 to 4, the wall of which is movable relative to the steering wheel so as to be able to actuate at least one vehicle control means.

8. Motor vehicle steering wheel comprising at least one assistance module according to one of the preceding claims.

9. Motor vehicle comprising at least one steering wheel according to the preceding claim, and/or at least one assistance module according to one of claims 1 to 7.
